(19) Europäisches Patentamt
European Patent Office
Office européen des brevets

(11) **EP 4 727 117 A1**

(12) **EUROPEAN PATENT APPLICATION**

(43) Date of publication:
**15.04.2026 Bulletin 2026/16**

(21) Application number: **24306660.2**

(22) Date of filing: **10.10.2024**

(51) International Patent Classification (IPC):
*H04N 19/11* (2014.01)    *H04N 19/117* (2014.01)
*H04N 19/176* (2014.01)    *H04N 19/44* (2014.01)
*H04N 19/593* (2014.01)

(52) Cooperative Patent Classification (CPC):
H04N 19/11; H04N 19/117; H04N 19/176;
H04N 19/44; H04N 19/593

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **BONNINEAU, Charles
MONTREAL, H2J 1G1 (CA)**
• **UTIDA BARBOSA FERREIRA, Renan
MONTREAL, H1X3H7 (CA)**
• **MARZUKI, Ismail
MONTREAL, H3J 1V4 (CA)**
• **PURI, Saurabh
SAINT-LAZARE, J7T 0P6 (CA)**

(74) Representative: **Vossius & Partner
Patentanwälte Rechtsanwälte mbB
Siebertstraße 3
81675 München (DE)**

(54) **ON DIFFERENT FILTER SIZES FOR DIMD**

(57)    Systems, methods, and instrumentalities are disclosed for different filter sizes for decoder side intra mode derivation (DIMD). In examples, an apparatus video decoding may determine that a DIMD mode is used to decode a block. In examples, an apparatus for video encoding may determine that a DIMD mode is used to encode a block. Based on the determination, the apparatus may determine a number of pixels associated with the block. Based on the determined number of pixels, the apparatus may select a size of set of filters for building a histogram of gradients (HoG) associated with the DIMD mode. In examples, the apparatus (e.g., for video decoding) may decode the block based on the selected size of the set of filters. In examples, the apparatus (e.g., for video encoding) may encode the block based on the selected size of the set of filters.

FIG. 7

**Description**

**BACKGROUND**

The present application is related to video coding systems that may be used to compress digital video signals, e.g., to reduce the storage and/or transmission bandwidth needed for such signals. Video coding systems may include, for example, block-based, wavelet-based, and/or object-based systems.

**BRIEF SUMMARY**

Systems, methods, and instrumentalities are disclosed for different filter sizes for decoder side intra mode derivation (DIMD). For example, an apparatus (e.g., an apparatus for video encoding and/or an apparatus for video decoding) may include a processor that is configured to perform one or more of the following.

In examples, an apparatus (e.g., an apparatus for video decoding) may determine that a DIMD mode is used to decode a block. Based on the determination that the DIMD is used to decode the block, the apparatus may determine a number of pixels associated with the block. The apparatus may select a size of set of filters based on the determined number of pixels associated with the block. The size of set of filters may be selected for building a histogram of gradients (HoG) associated with the DIMD mode. The apparatus may decode the block based on the selected size of the set of filters.

In examples, the apparatus may select a first size of the set of filters if the number of pixels is smaller than a first threshold. The apparatus may select a second size of the set of filters if the number of pixels is larger than the first threshold and smaller than a second threshold. The apparatus may select a third filter size of the set of filters if the number of pixels is larger than the second threshold. The first size of the set of filters may be associated with a small size block. The second size of the set of filters may be associated with an intermediate size block. The third size of the set of filters may be associated with a large size block.

In examples, the apparatus may determine the shape of the block. The shape of the block may be, or may include, a square block or a non-square block. The apparatus may select the size of the set of filters based on the shape of the block. The shape of the block may be, or may be associated with, a horizontal direction and a vertical direction. A set of filters (e.g., a first set of filters) may be associated with the horizontal direction. Another set of filters (e.g., a second set of filters) may be associated with the vertical direction. The size of the first set of filters and the size of the second set of filters may be, or may include, at least one of 5x5 Sobel filters, 2x2 filters, 3x3 filters, 3x5 filters, 5x3 filters, 2x3 filters, or 3x2 filters. In examples, the size of the first set of filters and the size of the second set of filters may be the same. In examples, the size of the first set of filters and the size of the second set of filters may be different.

In examples, the apparatus may obtain a size of a set of filters indication in video data, such as a bitstream. The size of the set of filters indication may indicate (e.g., may be configured to indicate) the size of the set of filters to be used.

In examples, an apparatus (e.g., an apparatus for video encoding) may determine that a DIMD mode is used to encode a block. Based on the determination that the DIMD is used to encode the block, the apparatus may determine a number of pixels associated with the block. The apparatus may select a size of set of filters based on the determined number of pixels associated with the block. The size of set of filters may be selected for building a histogram of gradients (HoG) associated with the DIMD mode. The apparatus may encode the block based on the selected size of the set of filters.

In examples, the apparatus may select a first size of the set of filters if the number of pixels is smaller than a first threshold. The apparatus may select a second size of the set of filters if the number of pixels is larger than the first threshold and smaller than a second threshold. The apparatus may select a third filter size of the set of filters if the number of pixels is larger than the second threshold. The first size of the set of filters may be associated with a small size block. The second size of the set of filters may be associated with an intermediate size block. The third size of the set of filters may be associated with a large size block.

In examples, the apparatus may determine the shape of the block. The shape of the block may be, or may include, a square block or a non-square block. The apparatus may select the size of the set of filters based on the shape of the block. The shape of the block may be, or may be associated with, a horizontal direction and a vertical direction. A set of filters (e.g., a first set of filters) may be associated with the horizontal direction. Another set of filters (e.g., a second set of filters) may be associated with the vertical direction. The size of the first set of filters and the size of the second set of filters may be, or may include, at least one of 5x5 Sobel filters, 2x2 filters, 3x3 filters, 3x5 filters, 5x3 filters, 2x3 filters, or 3x2 filters. In examples, the size of the first set of filters and the size of the second set of filters may be the same. In examples, the size of the first set of filters and the size of the second set of filters may be different.

In examples, the apparatus may include a size of a set of filters indication in video data, such as a bitstream. The size of the set of filters indication may indicate (e.g., may be configured to indicate) the size of the set of filters to be used.

## BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.

FIG. 2 shows an example video encoder according to one or more embodiments of the present disclosure.

FIG. 3 shows an example video decoder according to one or more embodiments of the present disclosure.

FIG. 4 illustrates an example decoder side intra mode derivation (DIMD) design.

FIG. 5 illustrates an example DIMD design for small blocks.

FIG. 6 illustrates example 5x5 Sobel filters to be used for DIMD.

FIG. 7 illustrates an example DIMD filter adaptation for a prediction unit (PU) of size 8x4.

FIG. 8 illustrates an example DIMD filter adaptation for a PU of size 4x8.

FIG. 9 illustrates example 3x5 filters for DIMD.

FIG. 10 illustrates example 5x3 filters for DIMD.

FIG. 11 illustrates example 2x3 filters for DIMD.

FIG. 12 illustrates example 3x2 filters for DIMD.

FIG. 13 illustrates example non-square DIMD filters applied to a square block.

## DETAILED DESCRIPTION

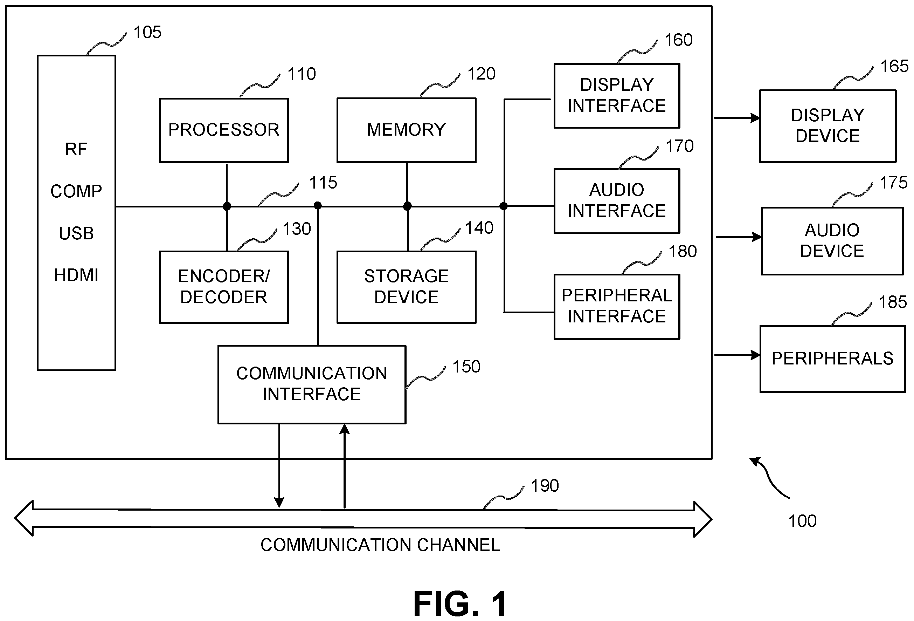

In describing the various embodiments of the present disclosure, certain terminology is used herein for convenience only and should not be considered as limiting such embodiments. In the drawings, the same reference numerals are employed for designating the same elements throughout the several figures and the present description.
Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.
One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.
The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.
The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

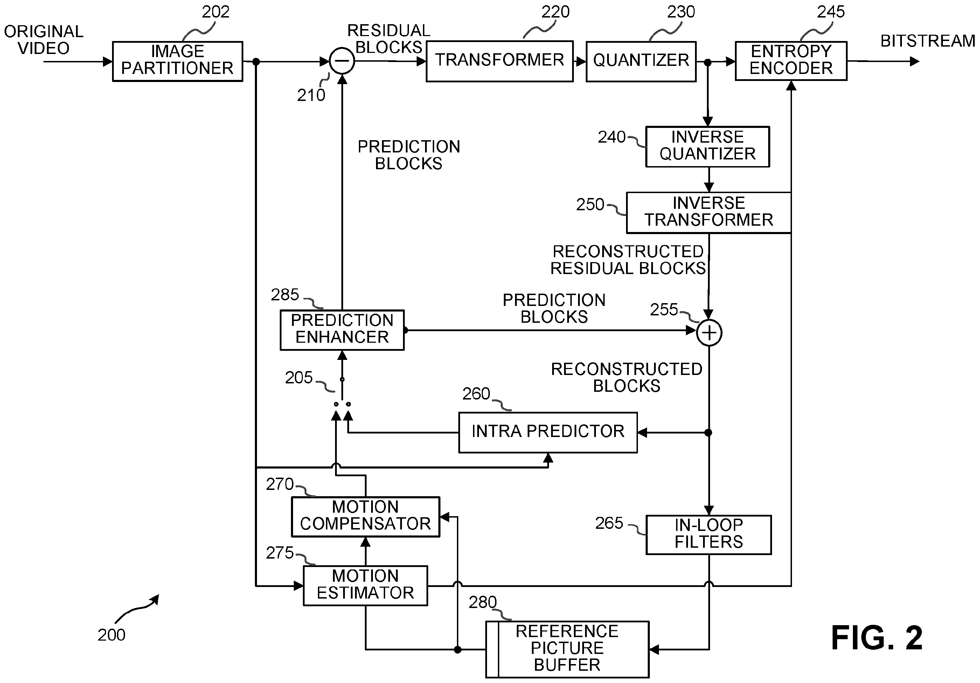

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

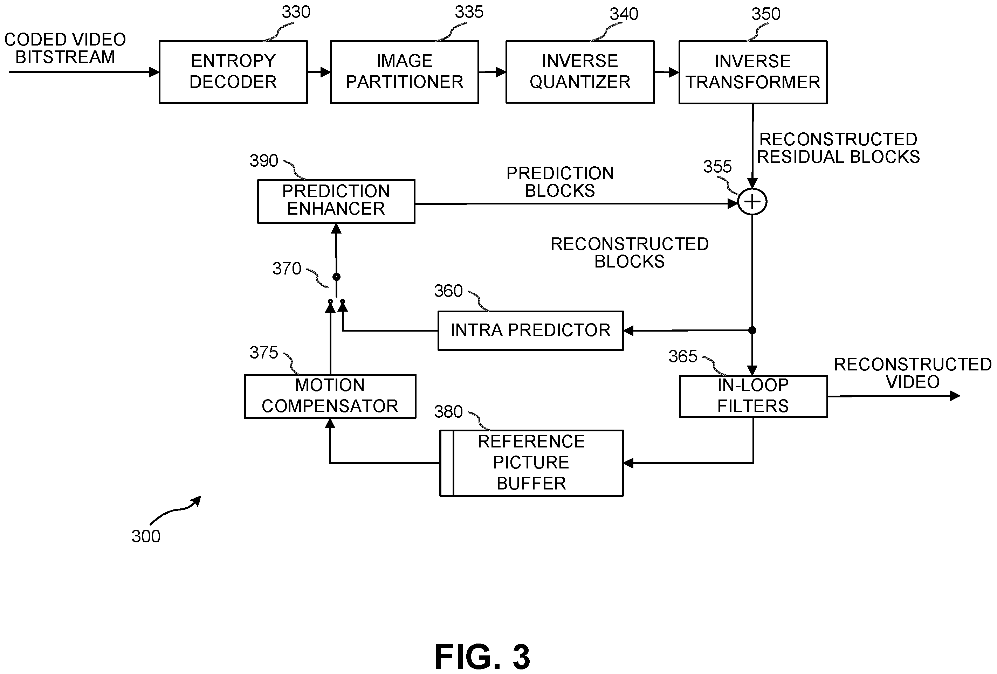

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, $Cb$, $Cr$).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

A device, e.g., a device for video encoding and/or video decoding, may include a processor that is configured to perform one or more of the following. A device may improve an intra prediction part. For example, as described herein, one or more different filter sizes may be used to build the histogram of gradients (HoGs) in DIMD. In examples, 2x2 edge detection filters may be configured. In examples, 3x3 Sobel filters may be configured. In examples, the 2x2 edge detection filters may be configured (e.g., alternatively and/or in addition to) the 3x3 Sobel filters, e.g., to speed up the HoG generation in DIMD while improving performance. The filters (e.g., 2x2 edge detection filters) may be configured and/or applied to (e.g., only applied to) one or more small blocks (e.g., 4x8, 8x4, and/or 4x4). The filters may decrease the performance of DIMD when the filters are applied to one or more larger blocks. As described herein, a set of filters may be increased to maintain the performance of DIMD when the smaller filters are used for one or more larger blocks. Additionally and/or alternatively, the larger filters may be used to use more lines of neighboring reconstructed pixels in the HoG construction process of decoder side intra mode derivation (DIMD).

DIMD may be a tool that derives an intra prediction mode of a current block on an encoder side and/or a decoder side, e.g., to avoid signaling. The derivation may be performed by using the reconstructed pixels in an L-shape template on the top-left side of the current block. A HoG may be constructed by computing one or more gradients of the reconstructed neighboring pixels, e.g., using 3x3 Sobel filters. The intra mode of the current block may be derived by blending the planar mode with one or more (e.g., several) intra prediction modes corresponding to the highest directionalities in the HoG.

To reduce the complexity of the HoG construction process, the size of the filter being used to compute the gradients may be reduced. For example, 2x2 edge detection filters may be used (e.g., instead of and/or in addition to 3x3 Sobel filters), e.g., to reduce the number of operations when computing the gradients. As described herein, reducing the size of the filter may decrease the performance when the filters are applied on one or more larger blocks, e.g., as some relevant reconstructed neighboring samples are not considered when building the HoG.

As described herein, the size of the filter being used may be reduced while preventing loss when the filters are applied to larger blocks. For example, the filters may target one or more rectangular blocks, where a smaller filter size may be used along the larger dimension of the block, e.g., with limited impact on the performance.

DIMD may be configured as described herein.

If DIMD is applied, one or more (e.g., up to five) intra modes may be derived from one or more reconstructed neighbor samples. The five predictors may be combined with a planar mode predictor with one or more weights derived, e.g., from one or more histogram of gradients. The division operations in weight derivation may be performed utilizing the same lookup table (LUT) based integerization scheme used by a cross-component linear model (CCLM). For example, the division operation in the orientation calculation may be depicted in (1).

$$Orient = G_y / G_x \quad (1)$$

The division operation in the orientation calculation may be computed by the following LUT-based scheme in (2), (3), (4), and/or (5):

$$x = Floor(\ Log2(\ Gx\ )\ ) \quad (2)$$

$$normDiff = (\ (\ Gx << 4\ ) >> x\ )\ \&\ 15 \quad (3)$$

$$x += (\ 3 + (\ normDiff\ != 0\ )\ ?\ 1 : 0\ ) \quad (4)$$

$$Orient = (Gy^* (\ DivSigTable[\ normDiff\ ]\ |\ 8\ ) + (\ 1 << (\ x\text{-}1\ )\ )) >> x \quad (5)$$

The following, in (6), may depict (e.g., possible) values for DivSigTable.

$$DivSigTable[16] = \{\ 0, 7, 6, 5, 5, 4, 4, 3, 3, 2, 2, 1, 1, 1, 1, 0\ \}\ (6)$$

For a block of size $W \times H$, the weight for a derived mode (e.g., each of the five derived modes) may be modified, for example, if the above histogram magnitude or left histogram magnitude is twice larger than the other one. In this case, the weights are location dependent. For example, the weights may be computed. In examples, the weights may be calculated in accordance with Eq. (7), for example, if the above histogram is twice the left:

$$w_i(x, y) = wDimd_i + \Delta_i - 2\Delta_i \frac{y}{(H-1)} \quad (7)$$

In examples, the weights may be calculated in accordance with Eq. (8), for example, if the left histogram is twice the above:

$$w_i(x, y) = wDimd_i + \Delta_i - 2\Delta_i \frac{x}{(W-1)} \quad (8)$$

With reference to Eq. (7) and Eq. (8), $wDimd_i$ may be the unmodified uniform weight of the DIMD, and $\Delta_i$ may be pre-defined (e.g., set to 10).

Derived intra modes may be included into the primary list of intra most probable modes (MPMs). The DIMD process may be performed, e.g., before the MPM list is constructed. The primary derived intra mode of a DIMD block may be stored with a block. The primary derived intra mode may be used for the MPM list construction of the neighboring blocks.

The region of neighboring reconstructed samples (e.g., used for computing the histogram of gradients) may be based on (e.g., depend on) the availabilities of one or more reconstructed samples. The region of decoded reference samples of the current WxH luma coding block (CB) may be extended towards the above-right side (e.g., if available, up to W additional columns). The region of decoded reference samples of the current WxH luma CB may be extended towards the bottom-left side (e.g., if available, up to H additional rows).

A DIMD histogram may be computed.

The histogram may be computed from a template of the current block, e.g., using horizontal and/or vertical Sobel filters on pixels in a template (e.g., of width 3) around the block. For example, for a (e.g., each) pixel, the following filters are applied:

$$Gy = \begin{matrix} 1 & 2 & 1 \\ 0 & 0 & 0 \\ -1 & -2 & -1 \end{matrix}$$

$$Gx = \begin{matrix} 1 & 0 & -1 \\ 2 & 0 & -2 \\ 1 & 0 & -1 \end{matrix}$$

If both $Gy$ and $Gx$ are not zero, the orientation of the current pixel may be computed as illustrated in Eq. (9):

$$Orient = G_y/G_x s \quad (9)$$

If $Gy$ is zero, the orientation may be computed and/or considered as vertical. Otherwise, the orientation may be computed and/or considered as horizontal.

The histogram may be computed by summing up one or more (e.g., all) values of an (e.g., each) orientation. The histogram may not show whether the template has no orientation. For example, DIMD may not output DC or planar mode.

Edge detection filters may be configured for DIMD.

Using a 3x3 Sobel filter to build the HoG of the current block's template may be skipped (e.g., not be necessary in one or more, such as all, the cases). 2x2 edge detection filters may be used, to compute the HoG, e.g., to reduce the number of operations to be performed and/or the DIMD runtime. For example, the 2x2 edge detection filters may be applied one or more small block sizes (e.g., 8x4, 4x8, 4x4, and/or the like), e.g., to limit the impact on the performance.

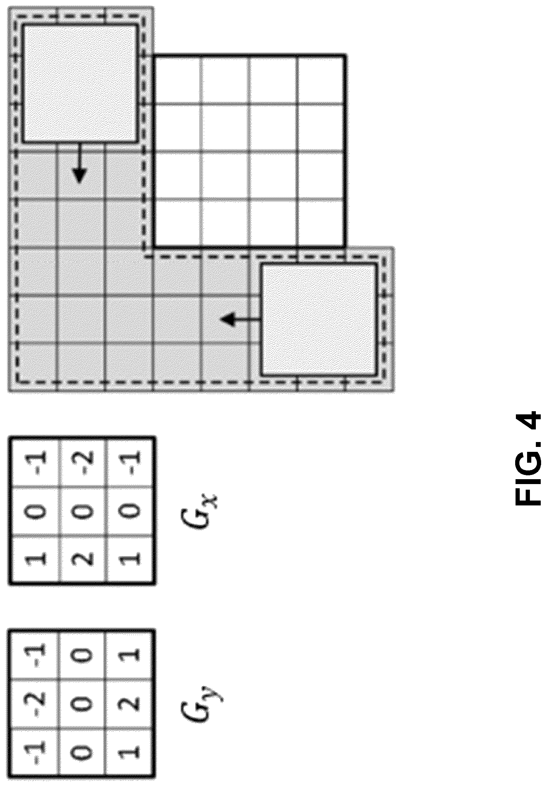

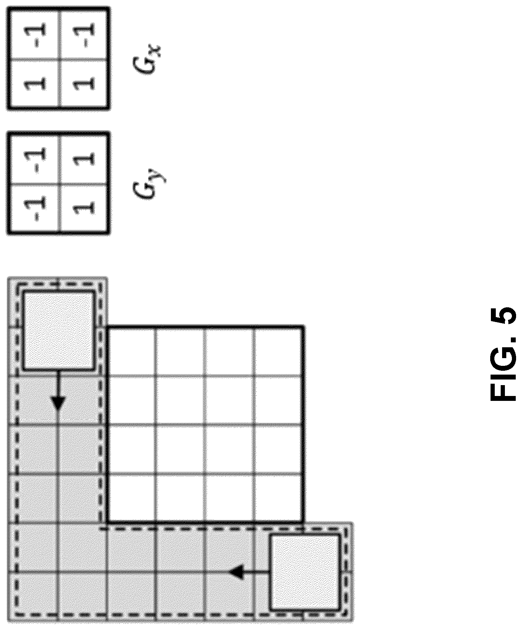

FIG. 4 illustrates an example of the current set of filters used by DIMD. FIG. 5 illustrates example filters as described here, e.g., to compute the DIMD HoG for small blocks.

As described herein, large filters may be configured for DIMD.

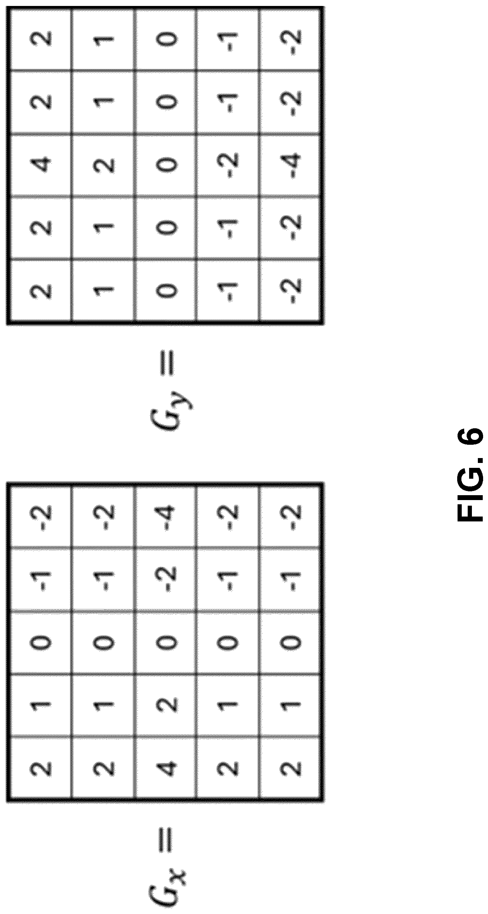

In examples, the size of the filter used when building the HoG in DIMD may be increased. For example, 5x5 Sobel filters may be used to consider a wider number of reconstructed samples in the L-shape template of the current block. 5 lines of reconstructed samples may be considered in the template. FIG. 6 illustrates example 5x5 Sobel filters to be used for DIMD as described herein.

After building the HoG using $G_x$ and $G_y$ using the filters described herein, one or more of the remaining steps of the DIMD process may stay the same (e.g., remain unchanged).

In examples, the size N of the filter to be used may be signaled (e.g., in video data, such as a bitstream) as a flag in a picture parameter set (PPS) and/or in a sequence parameter set (SPS).

Increasing the size of the filters in DIMD may be particularly useful for one or more larger blocks where more lines are relevant when predicting the directionality of the current block. In examples, the filters may be used (e.g., may only be used) for large blocks, while 3x3 filters may be used and/or kept for other blocks (e.g., blocks that are not large blocks). The size of the block may be determined based on (e.g., by considering) the total number of pixels in the block.

In examples, an apparatus (e.g., an apparatus for video decoding) may determine that a DIMD mode is used to decode a block. Based on the determination that the DIMD is used to decode the block, the apparatus may determine a number of pixels associated with the block. The apparatus may select a size of set of filters based on the determined number of pixels associated with the block. The size of set of filters may be selected for building a histogram of gradients (HoG) associated with the DIMD mode. The apparatus may decode the block based on the selected size of the set of filters.

In examples, the apparatus may select a first size of the set of filters if the number of pixels is smaller than a first threshold. The apparatus may select a second size of the set of filters if the number of pixels is larger than the first threshold and smaller than a second threshold. The apparatus may select a third filter size of the set of filters if the number of pixels is larger than the second threshold. The first size of the set of filters may be associated with a small size block. The second size of the set of filters may be associated with an intermediate size block. The third size of the set of filters may be associated with a large size block.

In examples, the apparatus may obtain a size of a set of filters indication in video data, such as a bitstream. The size of the set of filters indication may indicate (e.g., may be configured to indicate) the size of the set of filters to be used.

In examples, an apparatus (e.g., an apparatus for video encoding) may determine that a DIMD mode is used to encode a block. Based on the determination that the DIMD is used to encode the block, the apparatus may determine a number of pixels associated with the block. The apparatus may select a size of set of filters based on the determined number of pixels associated with the block. The size of set of filters may be selected for building a histogram of gradients (HoG) associated with the DIMD mode. The apparatus may encode the block based on the selected size of the set of filters.

In examples, the apparatus may select a first size of the set of filters if the number of pixels is smaller than a first threshold. The apparatus may select a second size of the set of filters if the number of pixels is larger than the first threshold and smaller than a second threshold. The apparatus may select a third filter size of the set of filters if the number of pixels is larger than the second threshold. The first size of the set of filters may be associated with a small size block. The second size of the set of filters may be associated with an intermediate size block. The third size of the set of filters may be associated with a large size block.

In examples, the apparatus may include a size of a set of filters indication in video data, such as a bitstream. The size of the set of filters indication may indicate (e.g., may be configured to indicate) the size of the set of filters to be used.

If the number of pixels $P$ in the block is larger than a threshold $Th_s$, filters of size 5x5 may be used to compute the gradients in the HoG. Otherwise (e.g., if the number of pixels $P$ in the block is smaller than a threshold $Th_s$), 3x3 filters may be used.

In examples, a large filter size $N \times N$ may be used for one or more large blocks, an intermediate filter size $M \times M$ may be used for one or more intermediate blocks, and a small filter size $S \times S$ may be used for one or more small blocks. Two thresholds $Th_{s0}$ and $Th_{s1}$ may be considered to determine the size of the filters based on the number of pixels $P$ in the block:

- If $P < Th_{s0}$, filters of size $N \times N$ may be used to compute the gradients in the HoG;
- If $Th_{s0} < P < Th_{s1}$, filters of size $M \times M$ may be used to compute the gradients in the HoG; and/or
- If $Th_{s1} < P$, filters of size $S \times S$ may be used to compute the gradients in the HoG.

For example, $N = 2$, $M = 3$, and $S = 5$.

In examples, the sizes of the filter $N, M,$ and $S$ to be used for large, intermediate, and small blocks, respectively, may be signaled as a PPS flag and/or an SPS level flag (e.g., in the video data, such as the bitstream).

The HoG information may be used by special intra modes to derive the low-frequency non-separable transform (LFNST)/ non-separable primary transform (NSPT) and multiple transform selection (MTS) transform sets by computing a virtual intra prediction mode (VIPM). In examples, different filter sizes of filters may be used based on whether the DIMD mode is performed and/or a VIPM is computed to derive the transform set.

In examples, DIMD filter size may be based on the shape of the block.

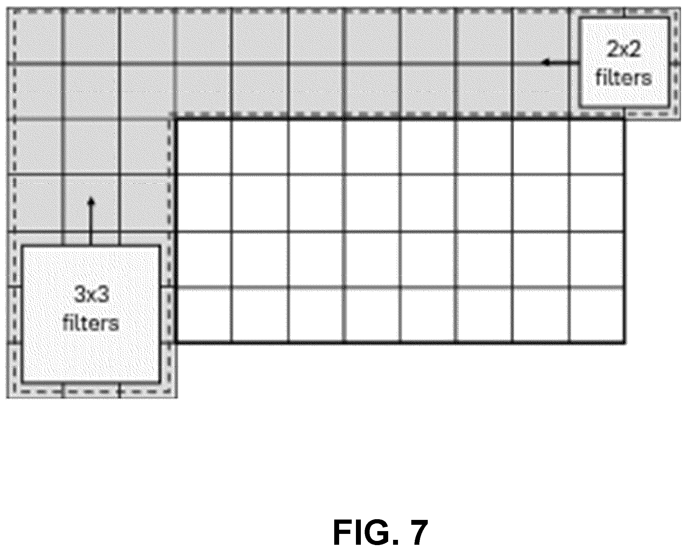

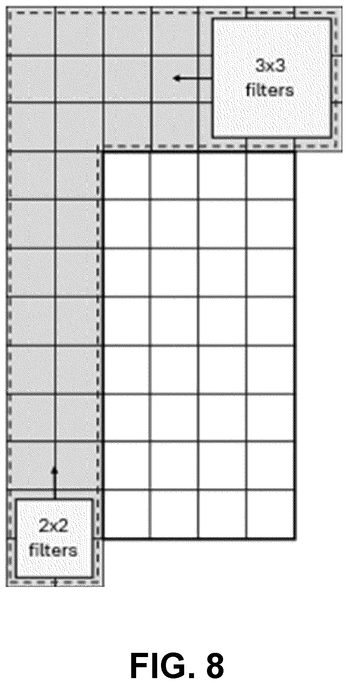

A different size of kernel regarding the shape of the block may be used. For example, rectangular blocks may be considered. In rectangular blocks, one or more samples that provide the most relevant information about the directionality may be located close to the smaller dimension of the block (e.g., the smallest dimension of the block). A larger filter size (e.g., a larger filter size than the filter size used for the larger dimension of the block) to build the HoG for the block may be used. An example of the different size of filters applied regarding the shape of the block may be illustrated in FIGs. 7 and/or 8. FIG. 7 illustrates an example of DIMD filter adaptation for a PU of size 8x4. FIG. 8 illustrates an example of DIMD filter adaptation for PU of size 4x8. As illustrated in FIGs. 7 and 8, a larger filter size (e.g., 3x3) may be used for the smaller dimension of the block (e.g., along the vertical direction as illustrated in FIG. 7 and along the horizontal direction as illustrated in FIG. 8), and a smaller filter size (e.g., 2x2) may be used for the larger dimension (e.g., along the horizontal direction as illustrated in FIG. 7 and along the vertical direction as illustrated in FIG. 8).

In examples, the apparatus (e.g., the apparatus for video decoding and/or the apparatus for video encoding) may determine the shape of the block. The shape of the block may be, or may include, a square block or a non-square block. The apparatus may select the size of the set of filters based on the shape of the block. The shape of the block may be (e.g., may include and/or may be associated with) a horizontal direction and a vertical direction. A set of filters (e.g., a first set of filters) may be associated with the horizontal direction. Another set of filters (e.g., a second set of filters) may be associated with the vertical direction. The size of the first set of filters and the size of the second set of filters may be, or may include, at least one of 5x5 Sobel filters, 2x2 filters, 3x3 filters, 3x5 filters, 5x3 filters, 2x3 filters, or 3x2 filters. In examples, the size of the first set of filters and the size of the second set of filters may be the same. In examples, the size of the first set of filters and the size of the second set of filters may be different.

In examples, if the shape of the filters is a square block, the size of the first set of filters and the size of the second set of filters may be, or may be associated with, at least one of 5x5 Sobel filters, 2x2 filters, 3x3 filters, and/or the like (e.g., as illustrated in FIGs. 7 and/or 8). As described herein, the size of the first set of filters and the size of the second set of filters may be the same or may be different.

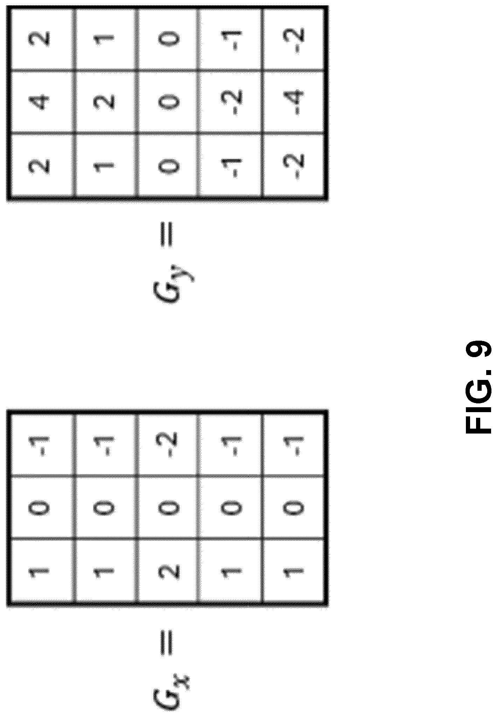

In examples, if the shape of the filters is a non-square block (e.g., a rectangular block), the size of the first set of filters and the size of the second set of filters may be, or may be associated with, at least one 3x5 filters, 5x3 filters, 2x3 filters, or 3x2 filters (e.g., as illustrated in FIGs. 9-13). As described herein, the size of the first set of filters and the size of the second set of filters may be the same or may be different.

In examples, 2x2 filters may be used along the smallest dimension of the blocks as described herein. 3x3 filters may be used along the larger dimension of the block. $N \times N$ filters may be used along the smaller dimension of the block and $M \times M$ filters may be used along the larger dimension of the block.

The usage of DIMD filter size based on the shape of the block as described herein may imply the same examples as for the square filters described herein.

In examples, non-square filter set for DIMD may be considered.

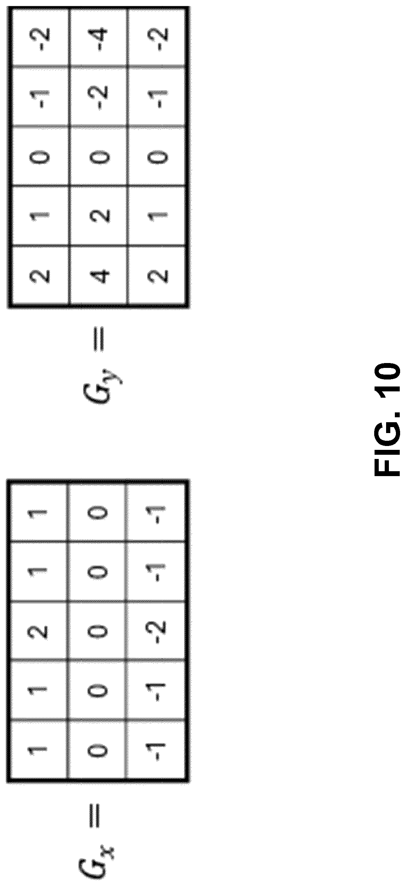

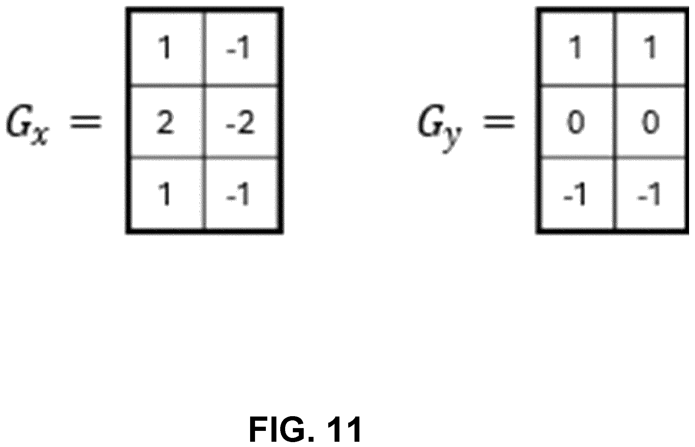

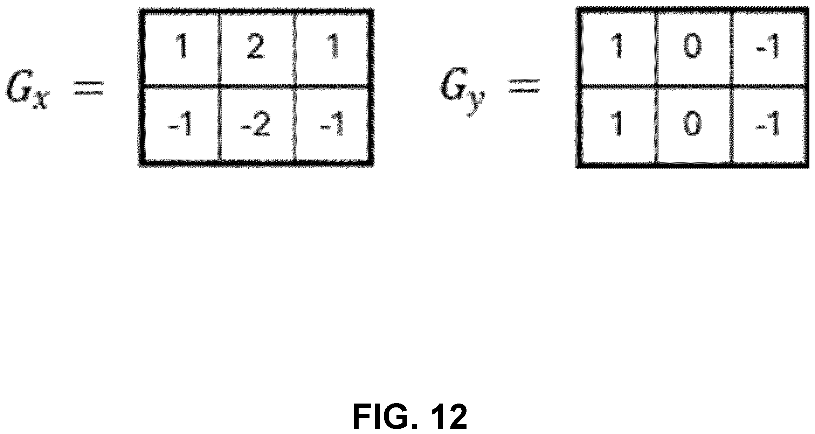

In examples, non-square filters may be proposed to build the HoG in DIMD. The non-square filters may obtain a different tradeoff, e.g., in terms of performance and/or complexity, as less operations are needed to compute the gradients. FIGs. 9-12 may illustrate examples of non-square filters. FIG. 9 illustrates example 3x5 filters. FIG. 10 illustrates example 5x3 filters. FIG. 11 illustrates example 2x3 filters. FIG. 12 illustrates example 3x2 filters.

The filters described herein may be configured and/or applied the same way as square filters to build the HoG as described herein.

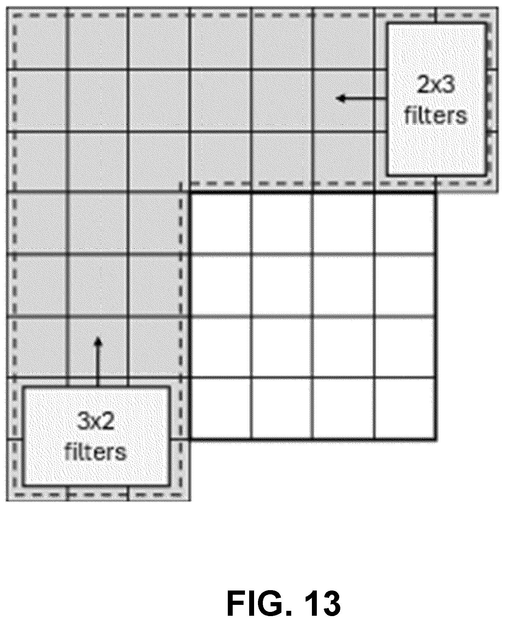

In examples, the shape of the filters may be adapted, for example, based on if the top part or the left part of the L-shape template of reconstructed neighboring pixels is processed. In an example, the same number of rows may be considered for both dimensions of the neighboring pixels of the block. For example, $N \times M$ filters may be used along the y axis of the L-shape template and $M \times N$ filters may be used along the x axis of the L-shape template. FIG. 13 illustrates an example of adaptation of the filters shape to the axis as described herein. For example, FIG. 13 illustrates non-square DIMD filters applied to a square block.

The examples described herein may imply the same variants as for the square filters as described herein.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. Video data (e.g., a bitstream) that may include one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. An apparatus for video decoding comprising:
   a processor configured to:

   determine that a decoder side intra mode derivation (DIMD) mode is used to decode a block;
   based on the determination that the DIMD is used to decode the block, determine a number of pixels associated with the block;
   select a size of a set of filters based on the number of pixels associated with the block, wherein the size of the set of filters is selected for building a histogram of gradients (HoG) associated with the DIMD mode; and
   decode the block based on the size of the set of filters.

2. A method for video decoding comprising:

   determining that a decoder side intra mode derivation (DIMD) mode is used to decode a block;
   based on the determination that the DIMD is used to decode the block, determining a number of pixels associated with the block;
   selecting a size of a set of filters based on the number of pixels associated with the block, wherein the size of the set of filters is selected for building a histogram of gradients (HoG) associated with the DIMD mode; and
   decoding the block based on the size of the set of filters.

3. An apparatus for video encoding comprising:
   a processor configured to:

determine that a decoder side intra mode derivation (DIMD) mode is used to encode a block;
based on the determination that the DIMD is used to encode the block, determine a number of pixels associated with the block;
select a size of a set of filters based on the number of pixels associated with the block, wherein the size of the set of filters is selected for building a histogram of gradients (HoG) associated with the DIMD mode; and
encode the block based on the size of the set of filters.

4.  A method for video encoding comprising:

determining determine that a decoder side intra mode derivation (DIMD) mode is used to encode a block;
based on the determination that the DIMD is used to encode the block, determining a number of pixels associated with the block;
selecting a size of a set of filters based on the number of pixels associated with the block, wherein the size of the set of filters is selected for building a histogram of gradients (HoG) associated with the DIMD mode; and
encoding the block based on the size of the set of filters.

5.  The apparatus of claim 1 or claim 3, wherein to select the size of set of filters comprises the processor being configured to:

select a first size of the set of filters if the number of pixels is smaller than a first threshold;
select a second size of the set of filters if the number of pixels is larger than the first threshold and smaller than a second threshold; or
select a third size of the set of filters if the number of pixels is larger than the second threshold.

6.  The method of claim 2 or claim 4, wherein selecting the size of set of filters comprises:

selecting a first size of the set of filters if the number of pixels is smaller than a first threshold;
selecting a second size of the set of filters if the number of pixels is larger than the first threshold and smaller than a second threshold; or
selecting a third size of the set of filters if the number of pixels is larger than the second threshold.

7.  The apparatus of any one of claims 1, 3, or 5 or the method of any one of claims 2, 4, or 5, wherein the first size of the set of filters is associated with a small size block, the second size of the set of filters is associated with an intermediate size block, and the third size of the set of filters is associated with a large size block,

8.  The apparatus of any one of claims 1 or 3, wherein the processor is further configured to:

determine a shape of the block, wherein the shape of the block comprises a square block or a non-square block; and
select the size of the set of filters based on the shape of the block.

9.  The method of any one of claims 2 or 4, wherein the method comprises:

determining a shape of the block, wherein the shape of the block comprises a square block or a non-square block; and
selecting the size of the set of filters based on the shape of the block.

10. The apparatus of any one of claims 1, 3, or 8 or the method of any one of claims 2, 4, or 9, wherein the set of filters is a first set of filters, wherein the shape of the block comprises a horizontal direction and a vertical direction, wherein the first set of filters is associated with the horizontal direction, wherein a second set of filters is associated with the vertical direction, and wherein the size of the first set of filters and the size of the second set of filters comprise at least one of 5x5 Sobel filters, 2x2 filters, 3x3 filters, 3x5 filters, 5x3 filters, 2x3 filters, or 3x2 filters.

11. The apparatus of any one of claim 1, 3, 8, or 10 or the method of any one of claim 2, 4, 9, or 10, wherein the size of the first set of filters and the size of the second set of filters are different.

12. A computer-readable medium comprising instructions for video decoding, the instructions causing one or more processors to perform the method of any one of claims 2, 6, 7, 9, 10, or 11.

13. A computer-readable medium comprising instructions for video encoding, the instructions causing one or more processors to perform the method of any one of claims 4, 6, 7, 9, 10, or 11.

14. Video data comprising information representative of the decoded output generated to one of the methods of any one of claims 2, 6, 7, 9, 10, or 11.

15. Video data comprising information representative of the encoded output generated to one of the methods of any of claims 4, 6, 7, 9, 10, or 11.

**FIG. 1**

EP 4 727 117 A1

**FIG. 2**

EP 4 727 117 A1

FIG. 3

**FIG. 4**

**FIG. 5**

$$G_x = \begin{bmatrix} 2 & 1 & 0 & -1 & -2 \\ 2 & 1 & 0 & -1 & -2 \\ 4 & 2 & 0 & -2 & -4 \\ 2 & 1 & 0 & -1 & -2 \\ 2 & 1 & 0 & -1 & -2 \end{bmatrix} \qquad G_y = \begin{bmatrix} 2 & 2 & 4 & 2 & 2 \\ 1 & 1 & 2 & 1 & 1 \\ 0 & 0 & 0 & 0 & 0 \\ -1 & -1 & -2 & -1 & -1 \\ -2 & -2 & -4 & -2 & -2 \end{bmatrix}$$

## FIG. 6

EP 4 727 117 A1

**FIG. 7**

FIG. 8

$$G_x = \begin{array}{|c|c|c|} \hline 1 & 0 & -1 \\ \hline 1 & 0 & -1 \\ \hline 2 & 0 & -2 \\ \hline 1 & 0 & -1 \\ \hline 1 & 0 & -1 \\ \hline \end{array} \qquad G_y = \begin{array}{|c|c|c|} \hline 2 & 4 & 2 \\ \hline 1 & 2 & 1 \\ \hline 0 & 0 & 0 \\ \hline -1 & -2 & -1 \\ \hline -2 & -4 & -2 \\ \hline \end{array}$$

**FIG. 9**

FIG. 10

$$G_x = \begin{array}{|c|c|} \hline 1 & -1 \\ \hline 2 & -2 \\ \hline 1 & -1 \\ \hline \end{array} \qquad G_y = \begin{array}{|c|c|} \hline 1 & 1 \\ \hline 0 & 0 \\ \hline -1 & -1 \\ \hline \end{array}$$

**FIG. 11**

EP 4 727 117 A1

$$G_x = \begin{array}{|c|c|c|} \hline 1 & 2 & 1 \\ \hline -1 & -2 & -1 \\ \hline \end{array} \qquad G_y = \begin{array}{|c|c|c|} \hline 1 & 0 & -1 \\ \hline 1 & 0 & -1 \\ \hline \end{array}$$

## FIG. 12

2x3 filters

3x2 filters

FIG. 13

Europäisches
Patentamt

European
Patent Office

Office européen
des brevets

## EUROPEAN SEARCH REPORT

**Application Number**

EP 24 30 6660

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/127909 A1 (SHARP KK [JP]) 20 June 2024 (2024-06-20) * paragraph [0088] - paragraph [0163]; figure 12 * ----- | 1-15 | INV.<br>H04N19/11<br>H04N19/117<br>H04N19/176<br>H04N19/44<br>H04N19/593 |
| X | FILIPPOV (TCL) A ET AL: "Non-EE2: On DIMD edge operators", 35. JVET MEETING; 20240712 - 20240719; SAPPORO; (THE JOINT VIDEO EXPLORATION TEAM OF ISO/IEC JTC1/SC29/WG11 AND ITU-T SG.16 ), , no. JVET-AI0140 14 July 2024 (2024-07-14), XP030320379, Retrieved from the Internet: URL:https://jvet-experts.org/doc_end_user/documents/35_Sapporo/wg11/JVET-AI0140-v2.zip JVET-AI0140-v2.docx [retrieved on 2024-07-14] * the whole document * ----- | 1-15 | |
| X | EP 4 258 662 A1 (BEIJING XIAOMI MOBILE SOFTWARE CO LTD [CN]) 11 October 2023 (2023-10-11) * paragraph [0017] - paragraph [0057] * ----- | 1-15 | **TECHNICAL FIELDS SEARCHED (IPC)**<br><br>H04N |

The present search report has been drawn up for all claims

| Place of search | Date of completion of the search | Examiner |
|---|---|---|
| Munich | 19 March 2025 | Cordara, Giovanni |

EPO FORM 1503 03.82 (P04C01)

## ANNEX TO THE EUROPEAN SEARCH REPORT
## ON EUROPEAN PATENT APPLICATION NO.

EP 24 30 6660

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2025

| Patent document cited in search report | | Publication date | Patent family member(s) | | Publication date |
|---|---|---|---|---|---|
| WO 2024127909 | A1 | 20-06-2024 | NONE | | |
| EP 4258662 | A1 | 11-10-2023 | CN | 119278625 A | 07-01-2025 |
| | | | EP | 4258662 A1 | 11-10-2023 |
| | | | WO | 2023193551 A1 | 12-10-2023 |

EPO FORM P0459

For more details about this annex : see Official Journal of the European Patent Office, No. 12/82